# EUROPÄISCHE PATENTANMELDUNG

(11) **EP 2 264 285 A2**
(43) Veröffentlichungstag der Anmeldung: **22.12.2010**
(21) Anmeldenummer: 10011185.5
(22) Anmeldetag: 19.07.2004
(51) Int. Cl.: F01D 11/02, F01D 11/00

(54) **Stationäre Gasturbine mit segmentiertem Innenring**

(30) Priorität: 21.08.2003 EP 03019002
(62) Teilanmeldung aus: 04741140.0
(71) Anmelder: Siemens Aktiengesellschaft, 80333 München (DE)
(72) Erfinder: Die Erfindernennung liegt noch nicht vor

(57) **Zusammenfassung**

Die Erfindung betrifft ein eine stationäre Gasturbine mit einem segmentierten Innenring (30). Um eine stationäre Gasturbinen mit einer Teilungsfuge bereitzustellen, bei der der Innenring in alternativer Weise ausgestaltet ist, wird vorgeschlagen, dass der Innenring (30) mittels eines Sicherungsrings (40) gegen axiales Verschieben gesichert ist.

## Beschreibung

Die Erfindung betrifft eine stationäre Gasturbine mit einem segmentierten Innenring zum Halten von Leitschaufeln.

Aus der DE 37 12 628 ist ein Innenring zum Halten von Leitschaufeln einer stationären Gasturbine bekannt. Die zu einem Leitschaufelring sternförmig um den Rotor angeordneten Leitschaufeln werden dabei mit ihrem radial außen liegenden Leitschaufelfuß am Gehäuse der Gasturbine befestigt. Die sich radial erstreckenden Leitschaufeln weisen an ihrer dem Rotor zugewandten Seite den Leitschaufelkopf auf, der mit dem feststehenden Innenring verbunden ist. Dieser im Querschnitt U-förmige Innenring umgreift den Rotor der Gasturbine koaxial und verbindet die Leitschaufeln eines Leitschaufelringes miteinander, um die Stabilität des Leitschaufelringes zu erhöhen und um das Schwingungsverhalten der Leitschaufeln zu verbessern. Ein Spalt ist dabei zwischen dem Steg des U-förmigen Innenrings, dessen Flanken und den korrespondierenden, dem Rotor zugehörigen Umfangs- und Stirnflächen gebildet. Gleichfalls weist der Steg des U-förmigen Innenrings an seiner dem Rotor zugewandten Oberfläche eine Hälfte einer Labyrinthdichtung auf, die mit der am Rotor angeordneten zweiten Hälfte die Labyrinthdichtung bildet.

Während des Betriebes der Gasturbine soll das im Strömungskanal strömende Arbeitsfluid nur an den Leitschaufeln eines Leitschaufelringes vorbeiströmen. Jedoch kann das Arbeitsfluid auch durch den von feststehenden und rotierenden Komponenten gebildeten Spalt als Leckagestrom hindurchströmen. Um die Leckageströmung zu verringern, wird der Spalt zwischen den feststehenden und den rotierenden Komponenten mittels der Labyrinthdichtung abgedichtet.

Ferner ist bekannt, im Spalt zwischen der Flanke des Innenrings und des Wellenabsatzes mehrere Labyrinthdichtungen vorzusehen, um eine verbesserte Dichtwirkung zu erzielen. Dabei sind zwei Labyrinthdichtungen axial und radial versetzt zueinander terrassenförmig im Spalt zwischen Flanke und Wellenabsatz angeordnet.

Aufgabe der Erfindung ist das Bereitstellen einer stationären Gasturbinen mit einer Teilungsfuge, bei der der Innenring in alternativer Weise ausgestaltet ist.

Die auf die Gasturbine bezogene Aufgabe wird durch die Merkmale des Anspruchs 1 gelöst. Vorteilhafte Ausgestaltungen sind in den Unteransprüchen gegeben.

Die Erfindung wird anhand einer Zeichnung erläutert. Dabei zeigt:
- FIG 1: einen segmentierten Befestigungsring für Leitschau- feln einer ersten Turbinenstufe,
- FIG 2: den segmentierten Innenring für die Leitschaufeln einer zweiten, dritten und vierten Turbinenstufe und
- FIG 3: einen Längsteilschnitt durch eine Gasturbine.

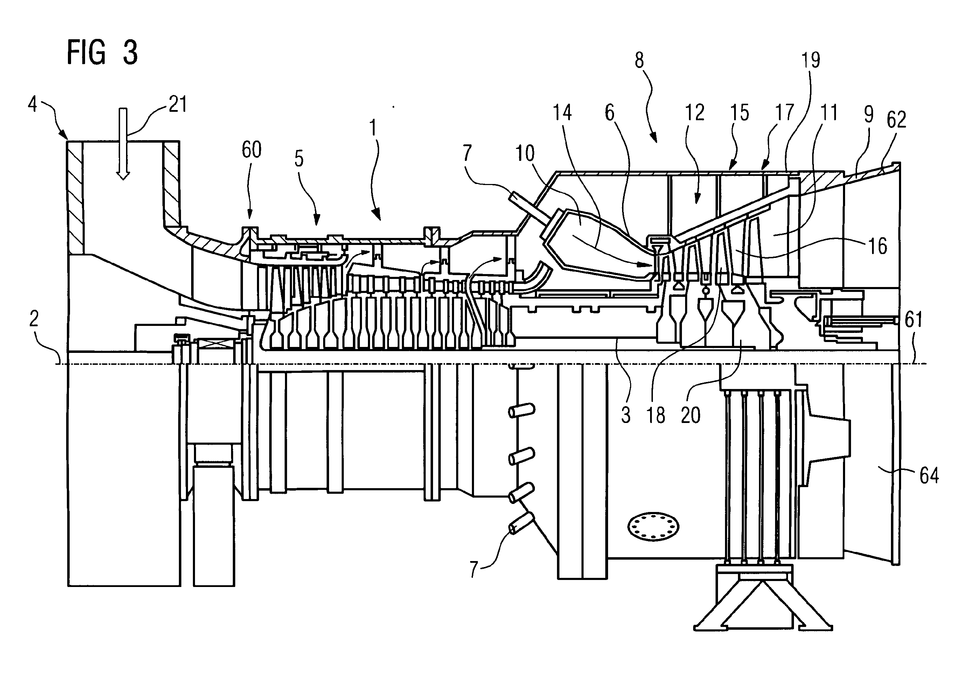

Die FIG 3 zeigt eine stationäre Gasturbine 1 in einem Längsteilschnitt. Sie weist im Inneren einen um eine Rotationsachse 2 drehgelagerten Rotor 3 auf, der auch als Turbinenläufer oder Rotorwelle bezeichnet wird. Entlang des Rotors 3 folgen aufeinander ein Ansauggehäuse 4, ein Verdichter 5, eine torusartige Ringbrennkammer 6 mit mehreren koaxial angeordneten Brennern 7, eine Turbine 8 und das Abgasgehäuse 9. Die Ringbrennkammer 6 bildet dabei einen Verbrennungsraum 10, der mit einem ringförmigen Heißgaskanal 11 kommuniziert. Dort bilden vier hintereinander geschaltete Turbinenstufen 12 die Turbine 8. Jede Turbinenstufe 12 ist aus zwei Schaufelringen gebildet. In Strömungsrichtung eines Arbeitsfluids 14 gesehen, folgt im Heißgaskanal 11 einem Leitschaufelring 17 ein aus Laufschaufeln 18 gebildeter Ring 15. Die Leitschaufeln 16 sind dabei am Stator 19 befestigt, wohingegen die Laufschaufeln 18 eines Ringes 15 mittels einer Turbinenscheibe 20 am Rotor 3 befestigt sind. An dem Rotor 3 angekoppelt ist ein Generator oder eine Arbeitsmaschine (nicht dargestellt).

Die stationäre Gasturbine 1 weist ein Gehäuse 60 auf, welches in Bezug auf eine zur Horizontebene parallel verlaufende Teilungsebene 61 in eine obere Gehäusehälfte 62 und eine untere Gehäusehälfte 64 zerlegbar ist. Bei der folgenden Verwendung der Begriffe "oben" und "unten" bzw. "obere Hälfte der/des..." und "untere Hälfte der/des..." ist dies für das betreffende Objekt jeweils in Bezug auf die Teilungsebene 61 der Gasturbine 1 zu verstehen.

Während des Betriebes der Gasturbine 1 wird vom Verdichter 5 durch das Ansauggehäuse 4 Luft 21 angesaugt und verdichtet. Die am turbinenseitigen Ende des Verdichters 5 bereitgestellte Luft 21 wird zu den Brennern 7 geführt und dort mit einem Brennmittel vermischt. Das Gemisch wird dann unter Bildung des Arbeitsfluids 14 im Verbrennungsraum 10 verbrannt. Von dort aus strömt das Arbeitsfluid 10 im Heißgaskanals 11 an den Leitschaufeln 16 und den Laufschaufeln 18 vorbei. An den Laufschaufeln 18 entspannt sich das Arbeitsfluid 14 impulsübertragend, so dass der Rotor 3 angetrieben wird und mit ihm die an ihn angekoppelte Arbeitsmaschine.

Die Leitschaufeln 16 weisen an ihrer dem Gehäuse 13 zugewandten Seite einen Leitschaufelfuß auf, mit dem sie in einem ringförmigen Leitschaufelträger verhakt sind. An ihrem dem Rotor 3 zugewandten Ende, dem Leitschaufelkopf, sind sie mit einem Innenring 30 verbunden.

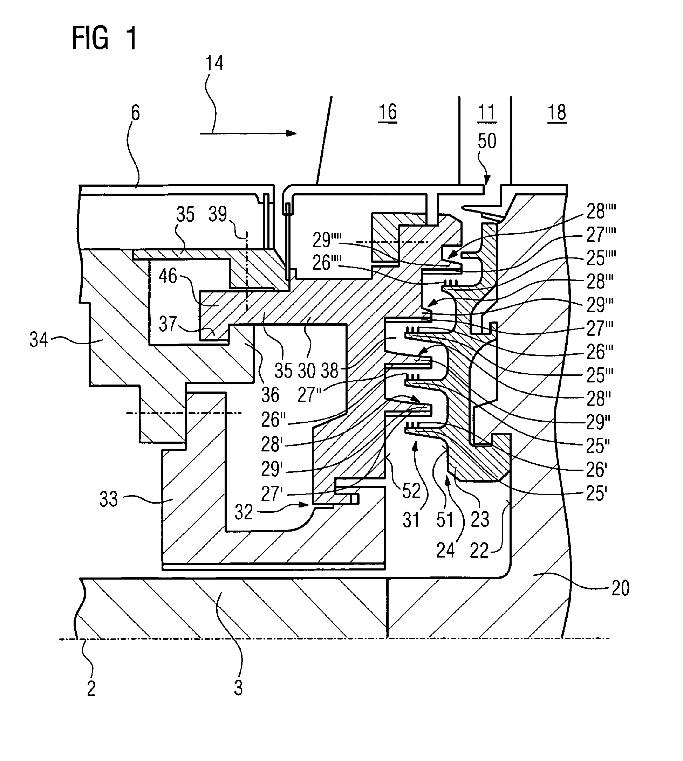

FIG 1 zeigt einen Ausschnitt aus der Gasturbine 1 zwischen der Leitschaufel 16 der ersten Turbinenstufe 12 und dem Rotor 3. Die radial innenliegende Innenwand der Brennkammer 6 begrenzt den Heißgaskanal 11 nach innen. In Strömungsrichtung des Arbeitsfluids 14 folgt der Leitschaufel 16 der ersten Turbinenstufe 12 die Laufschaufel 18.

Am Rotor 3 befindet sich die Turbinenscheibe 20, die an ihrem äußeren Umfang die Laufschaufeln 18 hält. Zur Sicherung der Laufschaufeln 18 gegen axiales Verschieben ist an einer Seitenwand 22 der Turbinenscheibe 20 ein Abdeckelement 23 mittels mehrerer radial beabstandeter Haken mit der Turbinenscheibe 20 verhakt. Dabei bildet das Abdeckelement 23 zusammen mit der Turbinenscheibe 20 einen Wellenabsatz 24.

An einer der Brennkammer 6 zugewandten Seitenwand 51 des Abdeckelements 23 sind mehrere sich in Axialrichtung erstreckende und koaxial umlaufende Balkone 25', 25", 25"', 25"" angeordnet. An jedem Balkon 25 erstrecken sich auf der dem Rotor 3 abgewandten Umfangsfläche jeweils drei Dichtzähne 26', 26", 26"', 26"", die koaxial auf dieser Umfangsfläche umlaufen.

Zwischen der radial innenliegenden Innenwand der Brennkammer 6 und dem Rotor 3 sind die drei Baugruppen 33, 34, 35 drehfest am Stator 19 montiert. Zwischen den Baugruppen 33, 34, 35 und dem Abdeckelement 23 ist der drehfeste Innenring 30 vorgesehen.

Der Innenring 30 weist an seiner dem Wellenabsatz 24 zugewandten Stirnseite 52 mehrere sich in Axialrichtung erstreckende und koaxial umlaufende Balkone 29', 29", 29"', 29"" auf. Dabei sind an den Umfangsflächen der Balkone 29, die den Dichtzähnen 26 zugewandt sind, jeweils Dichtflächen 27', 27", 27"', 27"" vorgesehen. Jede Dichtfläche 27 bildet mit ihren korrespondierenden Dichtzähnen 26 eine Labyrinthdichtung 28.

Zwischen dem Abdeckelement 23 und dem Innenring 30 ist ein meanderförmiger Spalt 38 geformt, in dem somit vier Labyrinthdichtungen 28', 28", 28"', 28"" sequenziell geschaltet sind, von denen die drei Labyrinthdichtungen 28', 28", 28"' radial übereinander gestapelt sind.

Die Labyrinthdichtung 28"" ist, bezogen auf die radial nächst innenliegende Labyrinthdichtung 28"' nicht radial gestapelt, sondern nach Art einer Terrasse angeordnet, d.h. die Labyrinthdichtung 28"" ist gegenüber der Labyrinthdichtung 28"' in Axialrichtung versetzt.

Der Innenring 30 weist an seiner der Brennkammer 6 zugewandten Stirnseite 52 einen sich in Axialrichtung erstreckenden Arm 46 auf, an dessen freien Ende ein sich in Radialrichtung nach innen erstreckender Vorsprung 37 angeformt ist.

Die Baugruppe 34 umfasst an ihrer dem Innenring 30 zugewandten Seite einen Vorsprung 36, der mit dem Vorsprung 37 des Innenrings 30 eine Verhakung bildet.

Während des Betriebes der Gasturbine 1 strömt im Heißgaskanal 11 ein Arbeitsfluid 14. Um ein Eindringen des Arbeitsfluids 14 als Leckagestrom in einen von feststehenden und rotierenden Komponenten gebildeten Spalt 38 zu verhindern, weist der Spalt 38 mehrere radial übereinander gestapelte Labyrinthdichtungen 28 auf, die strömungstechnisch gemeinsam als eine Dichtung 31 wirken.

Die drei ohne axialen Versatz zueinander gestapelten Labyrinthdichtungen 28', 28", 28"' erlauben eine kompaktere Bauweise bei gleichzeitiger Verbesserung der Dichtwirkung durch die Erhöhung der Anzahl von Labyrinthdichtungen 28.

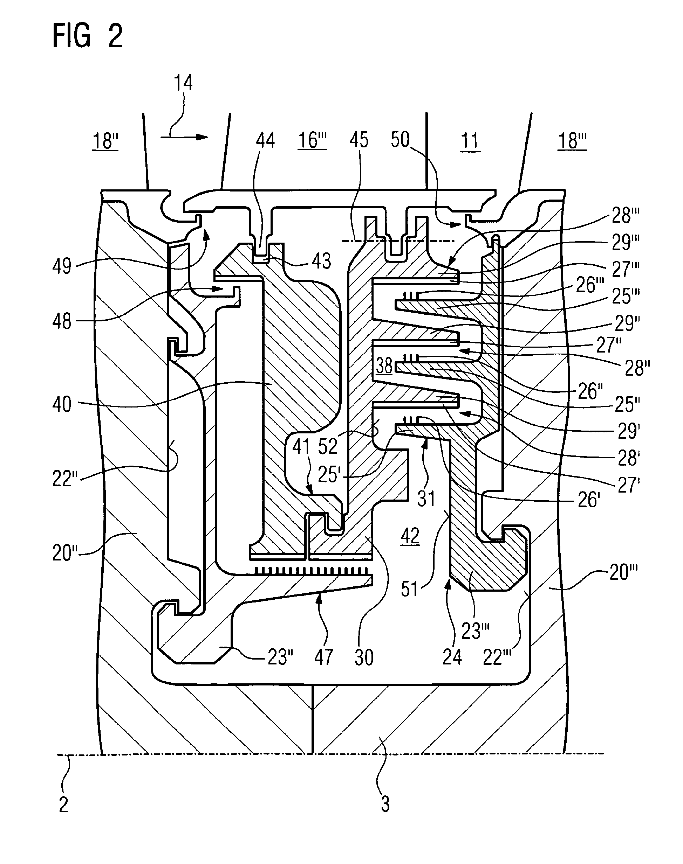

FIG 2 zeigt einen zwischen dem Heißgaskanal 11 und der Drehachse 2 des Rotors 3 liegenden Ausschnitt aus einer Gasturbine 1. Die Turbinenscheibe 20" trägt die Laufschaufel 18" der zweiten Turbinenstufe und die Turbinenscheibe 20"' die Laufschaufel 18"' der dritten Turbinenstufe. An der Seitenwand 22" der Turbinenscheibe 20" sichert das Abdeckelement 23" die Laufschaufel 18" gegen axiales Verschieben. Mittels zweier radial zueinander beabstandeter Verhakungen ist das Abdeckelement 23" mit der Turbinenscheibe 20" verhakt. Ebenso sichert das Abdeckelement 23"' die Laufschaufel 18"' gegen axiales Verschieben. Dabei ist das Abdeckelement 23"' mit der Turbinenscheibe 20"' auf der Seitenwand 22"' miteinander verhakt.

In der zwischen den beiden Turbinenscheiben 20", 20"' gebildeten nutförmigen Ausnehmung 42 ist der Innenring 30 mit einem Sicherungsring 40 vorgesehen.

Der Sicherungsring 40 ist mit dem Innenring 30 an seiner dem Rotor 3 zugewandten Seite mittels einer Verhakung 41 und an seiner dem Rotor 3 abgewandten Seite mit der Leitschaufel 16"' verbunden. Dazu ist der Innenring 30 mittels einer Schraube 45 mit der Leitschaufel 16"' verschraubt, wohingegen der Sicherungsring 40 mit der Leitschaufel 16"' verklemmt ist. Der Sicherungsring 40 weist eine Nut 43 auf, in die ein Vorsprung 44 sich erstreckt, der an der Leitschaufel 16"' angeordnet ist.

Das Abdeckelement 23"' weist an seiner der Turbinenscheibe 20"' abgewandten Seitenwand 51 drei sich in Axialrichtung erstreckende und koaxial umlaufende Balkone 25', 25", 25"' auf. Am Außenumfang der einzelnen Balkone 25', 25", 25"' sind jeweils drei koaxial umlaufende Dichtzähne 26', 26", 26"' vorgesehen. Der Innenring 30 weist an seiner der Turbinenscheibe 20"' zugeordneten Stirnseite 52 ebenfalls drei Balkone 29', 29", 29"' auf, die sich in Richtung des Wellenabsatzes 24 erstrecken und quer dazu koaxial umlaufen. Jeder Balkon 29 weist an seiner inneren Umfangsfläche eine Dichtfläche 27 auf, die den radial weiter innen liegenden Balkonen 25 des Abdeckelementes 23"' zugewandt sind. Dabei bildet die Dichtfläche 27' mit dem Dichtzahn 26' eine Labyrinthdichtung 28', die Dichtfläche 27" mit dem Dichtzahn 26" eine weitere Labyrinthdichtung 28" und die Dichtfläche 27"' mit dem Dichtzahn 26"' die dritte Labyrinthdichtung 28"'.

Die in der FIG 2 gezeigte Dichtung 31 kann durch den Ablauf der folgenden Montageschritte zusammengebaut werden:

Zu Beginn der Montage der stationären Gasturbine 1 mit der Teilungsebene 61 wird zunächst die untere Gehäusehälfte 64 aufgestellt. In der unteren Gehäusehälfte 64 sind bereits jeweils die unteren Hälfen der Leitschaufelringe 17 durch vormontierte Leitschaufeln 16 fertig gestellt.

Am noch nicht eingelegten Rotor 3 ist lediglich das Abdeckelement 23" montiert, die Seitenwand 22"' weist noch kein Abdeckelement 23"' auf.

Für jeden erfindungsgemäßen Innenring 30 wird die untere Hälfte des Sicherungsrings 40, welches durch ein ein- oder mehrteiliges, insgesamt 180° großes Segment gebildet wird, in die untere Gehäusehälfte 64 eingelegt, so dass der Vorsprung 44 in die Nut 43 eingreift. Danach erfolgt die Montage der unteren Hälfte des Innenrings 30 in der untere Gehäusehälfte 64, welcher mit dem Innenring 30 verhakt und teilweise mit den Leitschaufeln 16 verschraubt wird, um diese gegen Relativbewegungen zu sichern. Dabei ist die untere Hälfte des Sicherungsrings 30 ebenfalls aus einem oder mehreren, insgesamt 180° großem Segment gebildet.

Wenn für jeden Sicherungsring 40 und Innenring 30 die untere Hälfte in der unteren Gehäusehälfte 64 montiert ist, wird der Rotor 3 in die untere Gehäusehälfte 64 eingelegt. Dabei dürfen zumindest die unteren Hälften der Seitenwand 22"' der Turbinenscheiben 20, welche der Stirnseite 52 später zugewandt sind, kein Abdeckelement 23"' aufweisen, da ansonsten der Rotor 3 nicht in die untere Gehäusehälfte 64 einlegbar ist.

Auf der oberen Hälfte der Seitenwand 22"' des bereits in die untere Gehäusehälfte 64 eingelegten Rotors 3 wird ein Segment des Abdeckelements 23"' montiert.

Anschließend wird der Rotor 3 gedreht, so dass beim Drehvorgang das auf der oberen Hälfte montierte Segment des Abdeckelements 23"' in die untere Gehäusehälfte 64 hineingedreht wird. Dabei bewegen sich die axial erstreckenden Balkone 25 des Abdeckelements 23"' exakt zwischen die korrespondierenden Balkone 29 des in der unteren Hälfte bereits befindlichen Innenrings 30.

Es werde derart viele Segmente von Abdeckelementen 23 auf der oberen Hälfte der Seitenwände 22 montiert und in die untere Gehäusehälfte 64 eingedreht, bis die unteren Hälfte der Dichtung 31 vollständig gebildet ist.

Nachdem dann die obere Hälfte des Abdeckelements 23 auf der oberen Hälfte des Rotors 3 an der Seitenwand 22"' montiert ist, kann als nächstes die obere Hälfte des Innenrings 30 zur dessen Fertigstellung in die zwischen den Turbinenscheiben 20", 20"' geformte Ausnehmung 42 radial nach innen bewegt werden, um dann deren Balkone 29 anschließend durch die Verschiebung in Axialrichtung über die Balkone 25 der Abdeckelemente 23"' zu bewegen. Dabei liegt die obere Hälfte des Innenrings 30 auf den Flanschen der unteren Hälfte des Innenrings 30 bzw. Sicherungsrings 40.

Danach wird die obere Hälfte des Sicherungsrings 40 in die Ausnehmung 42 bewegt und mit dem Innenring 30 zum Fertigstellen des kreisrunden segmentierten Sicherungsrings 40 verhakt.

In bereits bekannter Weise können dann die Leitschaufeln 16 der oberen Hälfte des Leitschaufelrings 17 montiert werden.

Für die Befestigung der Leitschaufeln 16 der in der FIG 1 gezeigten ersten Turbinenstufe 12 wird die Montageanleitung analog durchgeführt.

In der unteren Gehäusehälfte 64 sind die Leitschaufeln 16 und die Baugruppen bereits 35, 36, 37 vormontiert, bevor der Rotor 3 ohne Abdeckelement 23 in diese eingelegt wird.

Danach wird, wenn nicht bereits vorhanden, ein oder mehrere, Segmente des Abdeckelements 23 an die obere Hälfte der Seitenwand 22 der ersten Turbinenscheibe 20 montiert. Anschließend wird der Rotor 3 gedreht, so dass das oder die Segmente sich in die untere Gehäusehälfte 64 unter Bildung der unteren Hälfte der Dichtung 31 einschieben.

Nachdem die obere Hälfte des Abdeckelements 23 auf der oberen Hälfte des Rotors 3 an der Seitenwand 22 montiert ist, kann als nächstes die obere Hälfte des Innenrings 30 in den Freiraum zwischen Turbinenscheibe 20 und Ringbrennkammer 6 radial nach innen bewegt werden, um dann deren Balkone 29 anschließend in Axialrichtung über die Balkone 25 der Abdeckelemente 23 zu schieben. Dabei liegt die obere Hälfte des Innenrings 30 auf den Stirnseiten der unteren Hälfte des Innenrings 30.

Anschließend werden die Baugruppen 33, 34, und 36 sukzessive eingebaut.

In einer alternativen Ausgestaltung kann jedes Segment aus mehreren Teilstücken gebildet sein.

Beim Betrieb ist eine Verschiebung des Rotors 3 entgegen der Strömungsrichtung des Arbeitsfluids 14 möglich, ohne dass ein Balkon 25, 29 die ihm gegenüberliegende Stirnseite berührt oder an dieser anschlägt.

Der während des Betriebes der Gasturbine 1 drehfeste Innenring 30 bildet mit den rotierenden Abdeckelementen 23 einen Spalt 38, der mittels der Dichtung 31 abgedichtet wird. Das Arbeitsfluid 14 wird wirksam am Verlassen des Heißgaskanals 11 gehindert, so dass es bestimmungsgemäß an den Laufschaufeln 18 vorbeiströmt. Der Leckagestrom wird wirksam verringert, was zu einer Wirkungsgradsteigerung der stationären Gasturbine führt.

Ferner verringern die Dichtungen 47, 48, 49, 50 den Leckagestrom zwischen rotierenden und drehfesten Komponenten.

## Patentansprüche

1. Stationäre Gasturbine,
mit einer zwischen einer unteren Gehäusehälfte (64) und einer oberen Gehäusehälfte (62) eingeschlossenen Teilungsebene (61) sowie
mit einem segmentierten Innenring (30) zum Halten von Leitschaufeln (16), der den Rotor (3) der Gasturbine koaxial umgreift und der am Außenumfang in gleichen Winkelabständen eine Anzahl von Leitschaufeln (16) aufweist, die einen Leitschaufelring (17) bilden,
**dadurch gekennzeichnet,**
**dass**
der Innenring (30) mittels eines Sicherungsrings (40) gegen axiales Verschieben gesichert ist.

2. Vorrichtung nach Anspruch 1,
wobei der Innenring (30) an zumindest einer drehfesten Baugruppe (33, 34 ,35) und/oder an den Leitschaufeln (16) festlegbar ist.

3. Vorrichtung nach Anspruch 1 oder 2,
wobei der Sicherungsring (40) segmentiert und an der Leitschaufel (16) gelagert ist.

4. Vorrichtung nach Anspruch 3
wobei der Sicherungsring bezogen auf ein durch die Turbine axial strömendes Arbeitsfluid (14) stromaufwärts des Innenrings (30) angeordnet ist.
